# EUROPEAN PATENT SPECIFICATION

(11) **EP 1 642 696 B1**
(45) Date of publication and mention of the grant of the patent: **24.12.2008**
(21) Application number: 05021072.3
(22) Date of filing: 27.09.2005
(51) Int. Cl.: B29C 45/44, B29C 45/14, B60J 10/00

(54) **Weather strip, manufacturing method thereof and molding device**
Dichtungsprofil, Verfahren zu seiner Herstellung und Formvorrichtung
Joint d'étanchéité, procédé de sa fabrication et dispositif de moulage

(30) Priority: 30.09.2004 JP 2004286467
(43) Date of publication of application: 05.04.2006
(73) Proprietor: TOYODA GOSEI CO., LTD., Nishikasugai-gun, Aichi-ken, 452-8564 (JP)
(72) Inventor: Kimura, Nobuyuki c/o TOYODA GOSEI CO.,LTD., Nishikasugai-gun Aichi-ken 452-8564 (JP); Ito, Masahiko c/o TOYODA GOSEI CO.,LTD., Nishikasugai-gun Aichi-ken 452-8564 (JP); Kubo, Yoshihisa c/o TOYODA GOSEI CO.,LTD., Nishikasugai-gun Aichi-ken 452-8564 (JP); Moriyama, Masafumi c/o TOYODA GOSEI CO.,LTD., Nishikasugai-gun Aichi-ken 452-8564 (JP)
(74) Representative: Kramer - Barske - Schmidtchen

(56) References cited:
- EP-A- 1 486 368
- US-A- 4 769 947
- US-A- 5 258 157
- US-A1- 2003 157 298
- US-A1- 2005 140 054
- PATENT ABSTRACTS OF JAPAN vol. 008, no. 054 (M-282), 10 March 1984 (1984-03-10) -& JP 58 205749 A (NISHIKAWA GOMU KOGYO KK), 30 November 1983 (1983-11-30)
- PATENT ABSTRACTS OF JAPAN vol. 015, no. 049 (M-1078), 6 February 1991 (1991-02-06) -& JP 02 283431 A (NISHIKAWA RUBBER CO LTD), 20 November 1990 (1990-11-20) -& DATABASE WPI Section Ch, Week 199101 Derwent Publications Ltd., London, GB; Class A32, AN 1991-004900 XP002361836 & JP 02 283431 A (NISHIKAWA GOMU KOGYO KK) 20 November 1990 (1990-11-20)
- PATENT ABSTRACTS OF JAPAN vol. 2003, no. 12, 5 December 2003 (2003-12-05) -& JP 2004 291283 A (TOYODA GOSEI CO LTD), 21 October 2004 (2004-10-21)
- PATENT ABSTRACTS OF JAPAN vol. 1996, no. 07, 31 July 1996 (1996-07-31) -& JP 08 072100 A (NISHIKAWA RUBBER CO LTD), 19 March 1996 (1996-03-19) -& DATABASE WPI Section Ch, Week 200351 Derwent Publications Ltd., London, GB; Class A32, AN 1996-204302 XP002361837 & JP 03 423787 B2 (NISHIKAWA GOMU KOGYO KK) 7 July 2003 (2003-07-07)

## Description

### BACKGROUND OF THE INVENTION

### 1. Field of the Invention

The present invention relates to a weather strip having a molded part, a manufacturing method thereof and a molding device.

### 2. Related Art

Conventionally, when manufacturing weather strips having a hollow portion of this type, an extruded part having the hollow portion is formed into an elongated shape through a known extrusion process. Then, the extruded part is cut to a predetermined length so as to form the extruded part with the predetermined length, and at least one distal end portion of the extruded part so formed is then set in a molding device for molding a molded part, whereby the molded part is molded so as to be continuously connected to the end portion of the extruded part.

The molding device that is used for the connection molding of the molded part is provided with a stationary mold, a plurality of movable molds and a core mold. The core mold is provided with a core main body and an extending plate which extends from the core main body for forming a hollow portion of the molded part. When molding the molded part, firstly, such that the respective molds are opened, at least one end portion of the extruded part with the predetermined length is set such that the end portion of the extruded part is fitted on one end portion of the core main body and another end portion of the extruded part is fitted on anther end portion of the core main body, and both end portions of the extruded parts are mounted in the molding device. Next, the respective molds are arranged at predetermined positions and are then closed together. At this time, a cavity for molding the molded part is formed by the respective molds and the extruded parts. Then, an unvulcanized rubber is injected into the cavity via a gate, not shown, so as to fill the cavity with the same rubber. Thereafter, the unvulcanized rubber is vulcanized, and the respective molds are opened so as to take out the core mold and the vulcanized rubber (a molded part precursor) which are integrated with each other. As this occurs, a slit will be formed in the precursor due to the existence of the extending plate.

Then, the molded part precursor having the hollow portion can be obtained by taking out the core main body from the slit. Thereafter, opening surfaces of the slit which face each other are joined together at a plurality of locations with an adhesive to thereby obtain the molded part. Namely, a weather strip can be obtained in which the molded part is integrated with the extruded part (refer to, for example, Japanese patent publication No. JP-A-58-205749).

Incidentally, when attempting to form a hollow portion over the whole area of the molded part in a longitudinal direction thereof, a core main body is proved so as to extend over the whole area of the molded part in the longitudinal direction thereof. In view of the easy removal of the core main body, it is desirable to form a slit so as to also extend over substantially the whole area of the molded part in the longitudinal direction thereof.

In this case, however, since the slit becomes long, the slit needs to be bonded at many locations therealong after the core main body has been removed. As a result, there may be caused a risk that increases in working manhours and cost are called for.

In addition, since the slit is bonded to be closed, the molded part is forced to be deformed in a direction in which its width is reduced. By this configuration, the product and the molds need to be designed allowing for such a deformation, this calling for a risk that the design becomes complex and the number of manhours required for design increases.

Furthermore, when molding the molded part which corresponds to a corner part, in the event that an inner angle of the corner part is relatively small (for example, less than 100 degrees), there is imposed a limitation that the width of the extending plate has to be narrowed. Even in this case, however, there exist needs of the implementation of effortless molding.

EP 1 486 368 A1 which forms prior art according to Article 54(3) EPC discloses a weather strip, a method of manufacturing the weather strip and a mold used in this method. The weather strip comprises linear extruded parts and molded corner parts bridging the linear extruded parts. The molded corner part is formed by a molding device comprising a center core body and a pair of side core bodies. The side core bodies are removed through slits in the molded corner part of the weather strip which extend in a linear portion of the corner part. The center core body is removed through a third slit in the corner portion.

### SUMMARY OF THE INVENTION

The invention was made with a view to solving the problem, and an object thereof is to provide a weather strip, a manufacturing method thereof and a molding device which can suppress increases in working and designing manhours and costs and realize a remarkable improvement in workability in molding and post machining after molding, when manufacturing the weather strip having the molded part.

This object is solved by a weather strip according to claim 1, a manufacturing method of a weather strip according to claim 2 and a molding device of a weather strip according to claim 6. Preferred embodiments are defined by the dependent claims.

Hereinafter, some aspects of the invention appropriate to attain the object will be described item by item.
(1) A weather strip including a molded part, corresponding to a corner portion of the weather strip, having a base portion and a seal portion which protrudes from the base portion so as to define a hollow portion, wherein
   a first slit and a second slit are formed in the base portion of the molded part so as to extend along a longitudinal direction for removal of a core mold and a bridge portion is formed integrally with the base portion between the first and second slits, and wherein the second slit is formed so as to extend through an inner corner portion.
   According to (1), the bridge portion is integrally formed with the base portion between the two longitudinally extending slits formed for ease of the removal of the core mold. By this configuration, being different from the related art in which a slit portion needs to be bonded to be closed after molding, no bonding is required by virtue of the bridge portion. In addition, in designing, no allowance needs to be made for an extent of deformation that would otherwise be caused in association with closure of the slit portion. Consequently, it is possible to realize the suppression of increases in designing and working manhours and costs. Furthermore, since the slits are formed in the base portion, being different from a case where slits are formed in the seal portion, it is possible to prevent the occurrence of a risk that the rigidity of the seal portion is damaged by the slits to thereby reduce the sealing properties.
   Moreover, since the two slits are formed, only the two extending plates are required which make up the core mold and form the slits, and no wide space needs to be provided between both the plates. Here, when molding the molded part which corresponds to the corner part, in the event that the inner angle of the corner part is relatively small, there is imposed a limitation that the width of the extending plates has to be narrowed. Even in the event that such is the case, the width of the extending plates can be limited to a minimum width without expanding the space between the two extending plates. As a result, there is provided an advantage that a stable molding is ensured without placing a load on the molding device.
   According to (1), the second slit is formed so as to extend through the inner corner portion. Consequently, first of all, one of the extending plates which is situated at a second slit side of the core mold is removed, whereby the second slit opens in an intersecting direction (in an L-shape). By this configuration, removal work of the remaining core mold can be implemented relatively easily. In this respect, it is possible to remarkably improve the workability in manufacturing.
(2) A manufacturing method of a weather strip having a molded part comprising a base portion and a seal portion which protrudes from the base portion so as to define a hollow portion, comprising the steps of:
   forming a cavity by a molding device provided with at least a core mold for forming the hollow portion and a sliding mold that is slidable relative to the core mold;
   injecting an elastic material which is in a plasticized state into the cavity, so as to fill the cavity with the elastic material, and then setting the elastic material,
   forming a first slit and a second slit in the base portion so as to extend in a longitudinal direction thereof for removal of the core mold in association with the setting of the elastic material, and
   forming a bridge portion integrally with the base portion between the first and second slits; and
   opening the molding device so as to remove the core mold from the first slit and the second slit to thereby obtain the molded part in which the hollow portion is molded; wherein
   the core mold includes:
      a first core having a first core main body and a first extending plate which extends from the first core main body; and
      a second core continuously connected to an end of the first core main body which constitutes a longitudinal end of a weather strip and having a second core main body and a second extending plate which extends from the second core main body; and
   the sliding mold includes:
      a first projection which is to be contacted with the first core main body at a second core side of the first extending plate; and
      a second projection which is to be contacted with the second main body or the first core main body at a fist core side of the second extending plate;
      wherein the first slit is formed by the first extending plate and the first projection for removal of the first core main body; and
   the second slit is formed by the second projection and the second extending plate for removal of the second core main body;
      whereby when removing the core mold, the sliding mold is caused to slide to move in a direction in which the first extending plate and the second extending plate extend such that the first projection and the second projection are separated relatively from the first core main body and the second core main body, respectively, so that the first core main body and the second core main body are removed from the first slit and the second slit, respectively.
      According to (2), since the bridge portion is formed integrally with the base portion between the first and second slits which extend in the longitudinal direction for ease of the removal of the core mold, being different from the related art in which a slit portion needs to be bonded to be closed after molding, no bonding is required by virtue of the integral bridge portion. In addition, in designing, no allowance needs to be made for an extent of deformation that would otherwise be caused in association with closure of the slit portion. Consequently, it is possible to realize the suppression of increases in designing and working manhours and costs. Furthermore, since the slits are formed in the seal portion for removing the core mold therefrom, being different from a case where slits are formed in the base portion, it is possible to prevent the occurrence of a risk that the rigidity of the seal portion is damaged by the slits to thereby reduce the sealing properties.
      In addition, the core mold that is used for molding the hollow portion includes the first core and the second core, and the sliding mold includes at least the first projection which is to be contacted with the first core main body at the second core side of the first extending plate and the second projection which is to be contacted with the second main body or the first core main body at the fist core side of the second extending plate. Then, when removing the core mold, the first and second projections are separated relatively from the first core main body and the second core main body, respectively, by sliding the sliding mold along the extending direction of the first extending plate and the second extending plate. Then, the first projection and the second projection are removed, whereby openings, which constitute part of the slits, are formed in the second core side of the first extending plate and the first core side of the second extending plate. By this configuration, a molded body can be moved relatively to the first core main body and the second core main body, whereby one of the core main bodies can be removed from one of the slits by virtue of the relative movement. Then, when the remaining core main body is removed from the other slit, the core mold can easily be removed. In other words, a remarkable improved can be realized in workability during manufacturing without calling for a complicated construction and placing a load on the mold. In addition, only the two extending plates are required to form both the slits, and the space between the two slits does not have to be expanded widely. Here, when attempting to mold the molded part which corresponds to the corner part, in the event that the inner angle of the corner part is relatively small, there is imposed a limitation that the width of the extending plates has to be narrowed. Even in the event that such is the case, the width of the extending plates can be limited to a minimum width without expanding the space between the two extending plates.
(3) A molding device of a weather strip, comprising:
   a core mold and a sliding mold which is provided slidably relative to the core mold for forming a molded part of the weather strip which comprises a base portion and a seal portion which protrudes from the base portion so as to form a hollow portion, wherein
   the core mold includes:
      a first core having a first core main body and a first extending plate which extends from the first core main body for forming the hollow portion; and
      a second core continuously connected to an end of the first core main body which constitutes a longitudinal end of a weather strip and having a second core main body and a second extending plate which extends from the second core main body for forming the hollow portion; and
   the sliding mold includes:
      a first projection which is to be contacted with the first core main body such that the first projection is brought in a close contact with a second core side of the first extending plate; and
      a second projection which is to be contacted with the first main body or the second core main body such that the second projection is brought in a close contact with a fist core side of the second extending plate.

According to (3), basically, the same function and advantage as those provided by (2) are provided.

### BRIEF DESCRIPTION OF THE DRAWINGS

Fig. 1 is a partial perspective view which describes a molded part as viewed from an attaching surface side of a weather strip in an embodiment;
Fig. 2 is an exemplary drawing which briefly describes the construction of the weather strip;
Fig. 3 is a sectional view which illustrates an example of an extruded part;
Fig. 4 is a sectional view which illustrates a molded part which corresponds to an upper corner part;
Fig. 5 is a partial sectional view as viewed in a lateral direction which illustrates a molding device for use for molding the molded part;
Figs. 6A and 6B are partial sectional views in a vertical direction which illustrate the molding device;
Fig. 7 is an exemplary drawing of the molding device and the like which describes a molding process of the molded part;
Fig. 8 is an exemplary drawing of the molding device and the like which describes the molding process of the molded part;
Fig. 9 is an exemplary drawing of the molding device and the like which describes the molding process of the molded part; and
Fig. 10 is an exemplary drawing of the molding device and the like which describes the molding process of the molded part.

### DETAILED DESCRIPTION OF THE PREFERRED EMBODIMENTS

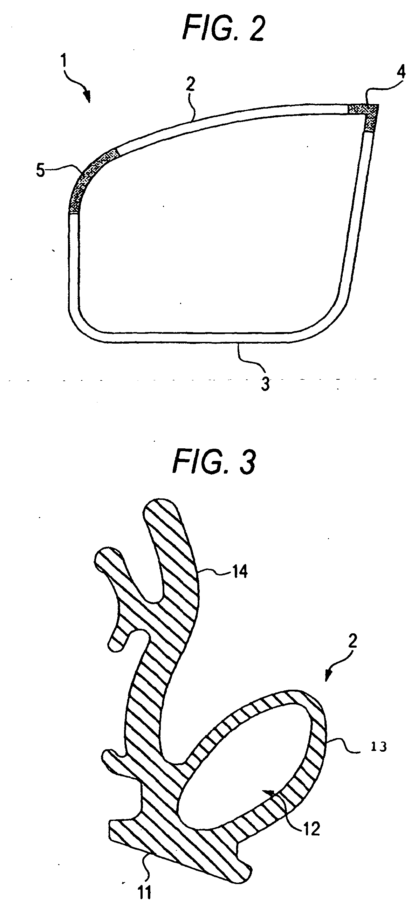

Hereinafter, one embodiment of the invention will be described by reference to the drawings. As shown in Fig. 2, a door weather strip (hereinafter, simply referred to as a *weather strip*) 1 of EPDM (ethylene-propylene-diene terpolymer) or TPO (thermoplastic elastomer of olefin) is attached so as to extend along an outer peripheral portion thereof, for example, to an automotive door.

The weather strip 1 includes extruded parts 2, 3 and molded parts (portions to which a dot-scattering pattern is imparted in the figure) 4, 5. Namely, extruded parts which are formed substantially in a straight line (into an elongated shape) by means of an extruding machine, not shown, and are then cut to predetermined lengths are used for the extruded parts 2, 3. In addition, the molded parts 4, 5 are formed or molded by means of a predetermined molding device so as to connect together end edges of the adjacent extruded parts 2, 3.

As shown in Fig. 3, the extruded part 2(,3) includes a base portion 11 which is attached to a door frame of an automotive door, not shown, a seal portion 13 which extends from the base portion 11 and has a hollow portion 12 therein and a lip portion 14 which extends from a proximal end portion of the seal portion 13.

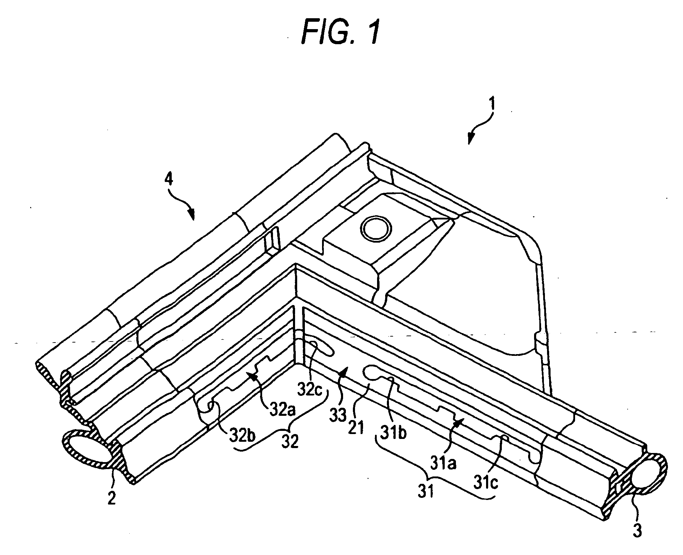

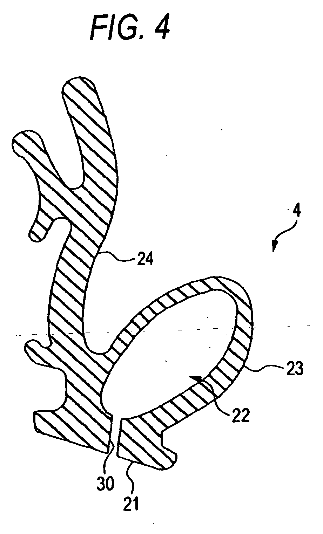

In addition, as shown in Fig. 4, as to the molded part 4 (,5), while shapes are slightly different, as with the extruded parts 2, 3, the molded part has a base portion 21, a hollow portion 22, a seal portion 23 and a lip portion 24. As shown in Fig. 1, in this embodiment, since the molded part 4 which corresponds to an upper corner part has specific features to the embodiment, the description of the embodiment will be made hereinafter mainly with respect to the molded part 4. Note that in Fig. 1, as a matter of convenience in description, a weather strip is shown which is to be attached to a door at the side of a front passenger seat. As shown in the same figure, the molded part 4 in this embodiment is formed into substantially an L-shape so as to correspond to the upper corner part, and an upper side portion (a lateral portion) constitutes a shorter side portion and a vertical portion constitutes a longer side portion, an inner angle of the molded part 4 being set to less than 100 degrees, for example, 95 degrees. Then, in the molded part 4 in this embodiment, a slit 30 is formed in the base portion 21 thereof for ease of the removal of a core mold, which will be described later on.

The slit 30 includes a first slit 31 and a second slit 32. Both the slits 31, 32 are provided so as to extend over substantially the whole area of the molded part 4 in a longitudinal direction of the weather strip 1 in substantially a straight line with each other. However, an integral bride portion 33 having no slit exists between the first slit 31 and the second slit 32.

The first slit 31 is formed in the vertical portion and is provided with a first main slit portion 31a and first sub-slit portions 31b, 31c which are formed at ends thereof. The second slit 32 is formed so as to extend over substantially the whole area of the upper side portion into part of the vertical portion by straddling an inner corner portion and is provided with a second main slit portion 32a and sub-slit portions 32b, 32c which are formed at ends thereof. To be more specific, the second main slit portion 32a and one of the second sub-slit portions 32b are formed in the upper side portion, and the other second sub-slit portion 32c is formed in the vertical portion. Note that end edge sides of the first and second sub-slit portions 31b, 31c, 32b, 32c are formed into substantially arc-like shapes, whereby the prevention of generation of cracks is realized.

Next, a molding device 51 will be described which is used to mold the molded part 4 which corresponds to the upper corner part of the weather strip 1.

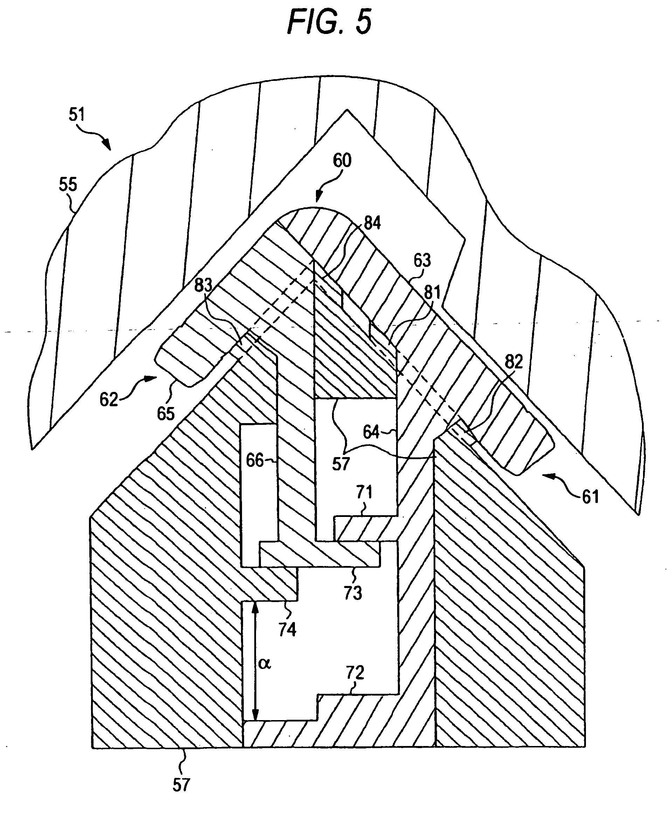

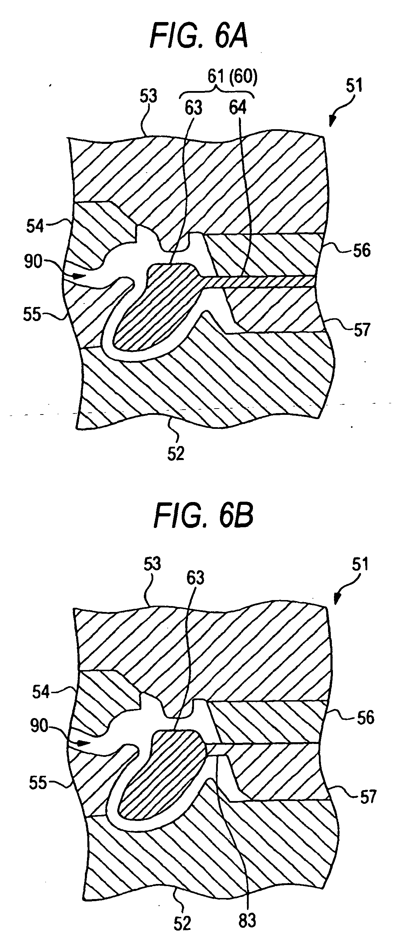

Fig. 5 is a partially sectional view showing the molding device 51 which is used to mold the molded part 4 as viewed in a lateral direction, and Figs. 6A, 6B are partially sectional views of the molding device 51 as viewed in a vertical direction. The molding device 51 includes a lower mold 52, which is situated at a lower side as viewed in Figs. 6A, 6B, an upper mold 53, which is situated at an upper side in the same figures, an outer upper intermediate mold 54 and an outer lower intermediate mold 55, which are situated at an outer side of the upper corner part and an inner upper intermediate mold 56 and an inner lower intermediate mold 57, which are situated at an inner side of the upper corner part. In this embodiment, a sliding mold is made up mainly of the inner lower intermediate mold 57. In addition, a core mold 60 is provided between the inner upper intermediate mold 56 and the inner lower intermediate mold 57.

The core mold 60 is provided with a first core 61 and a second core 62. The first core 61 has a first core main body 63 which forms a vertical portion side of the hollow portion 22 and a first extending plate 64 which extends inwards (downwards as viewed in Fig. 5) from the first core main body 63. The second core 62 has a second core main body 65 which is continuously connected to one end face of the first core main body 63 so as to form an upper side portion side of the hollow portion 22 and a second extending plate 66 which extends inwards (downwards as viewed in Fig. 5) from the second core main body 65.

An intermediate locking projection 71 and a proximal end portion locking projection 72 are integrally formed on the first extending plate 64 so as to extend towards the second extending plate 66. In addition, a proximal end portion locking portion 73 is integrally formed on the second extending plate 66 so as to extend towards the first extending plate 64.

In addition, there are integrally formed on the inner lower intermediate mold 57 which makes up the sliding mold a recessed portion which permits the insertion and passage of the first extending plate 64 and the second extending plate 66 and the sliding movement of the inner lower intermediate mold 57 relative to those plates and a stopper 74 which restricts the movement of the second core 62 and the like. The inner lower intermediate mold 57 is constructed so as to slide to move by a predetermined stroke amount a in vertical directions as viewed in Fig. 5. In this embodiment, the extending direction of the first extending plate 64 and the second extending plate 66 is made to be in parallel with the slide moving direction of the inner lower intermediate mold 57.

Furthermore, first projections 8,1, 82 for forming the first sub-slits 31b, 31c are integrally formed on a distal end of the inner lower intermediate mold 57. The first projections 81, 82 are made to be brought into surface contact with the first core main body 63 such that they are in close contact with both side edges of the first extending plate 64 when the respective molds 52 to 57, 60 are set in place. In addition, second projections 83, 84 for forming the second sub-slits 32b, 32c are integrally formed on the distal end of the inner lower intermediate mold 57. The second projections 83, 84 are made to be brought into surface contact with the core main bodies such that the one of the second projections 83 is brought into surface contact with the second core main body 65, while the other second projection 84 is brought into surface contact with the first core main body 63 such that the second projections are in close contact with both side edges of the second extending plate 66 when the respective molds 52 to 57, 60 are set in place.

In addition to this, when the respective molds 52 to 57, 60 are set in place, the proximal end portion locking projection 73 on the second extending plate 66 of the second core 62 is locked relative to the stopper 74 on the inner lower intermediate mold 57, and the intermediate locking projection 71 on the first extending plate 64 of the first core 61 is locked relative to the proximal end portion locking projection 73, whereby the positioned states of the respective constituent members are made to be maintained.

Molding surfaces are formed on the respective molds 52 to 57, 60 which constitute a configuration corresponding to the external shape of the molded part 4. In addition, the first core main body 63 of the first core 61 and the second core main body 65 of the second core 62 are set substantially at the center of a space surrounded by the respective molds 52 to 57. Then, a cavity 90 for molding the molded part 4 is formed by these molding surfaces and outer surfaces of the first core main body 63 and the second core main body 65 (refer to Figs. 6A and 6B) .

Next, a method for manufacturing the weather strip 1 that is configured as has been described above and the function and advantage associated with the manufacturing thereof will be described. First of all, the extruded parts 2, 3 are molded as has been described above by way of a known extrusion process using an extruding machine, not shown. As a result of the extrusion, the base portion 11, the seal portion 13, the hollow portion 12 and the lip portion 14 are formed.

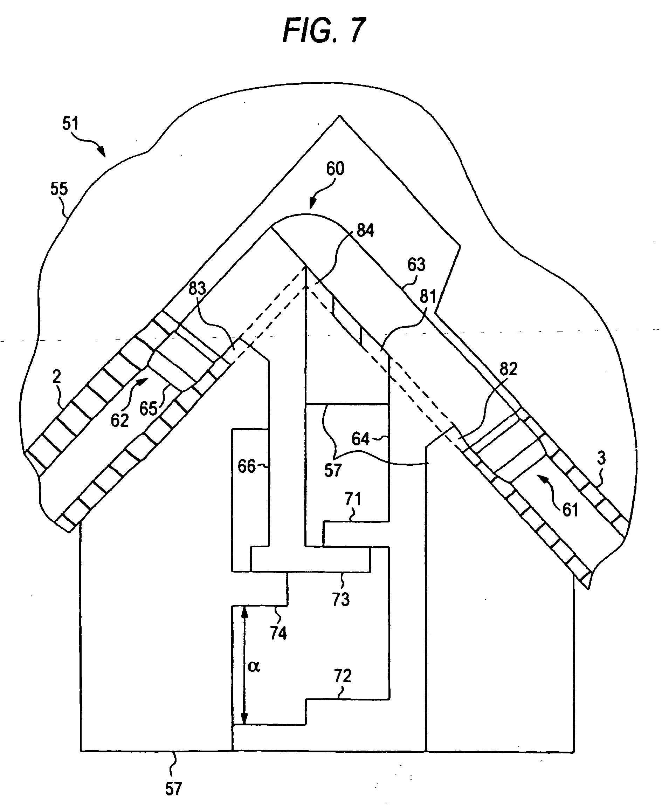

Next, the molded part 4 will be formed in a manner that will be described below. Namely, as shown in Fig. 7, end portions of the extruded parts 2 and 3 are first fitted on longitudinal end portions of the second core main body 65 and the first core main body 63, respectively, such that the respective molds 52 to 57 are opened relative to each other, whereby the extruded parts 2, 3 are set in place in the molds. In addition, the first core 61 and the second core 62 are set at predetermined positions and the molds are then closed, whereby the extruded parts 2, 3 are mounted and fixed relative to the molding device 51 and the cavity 90 is defined.

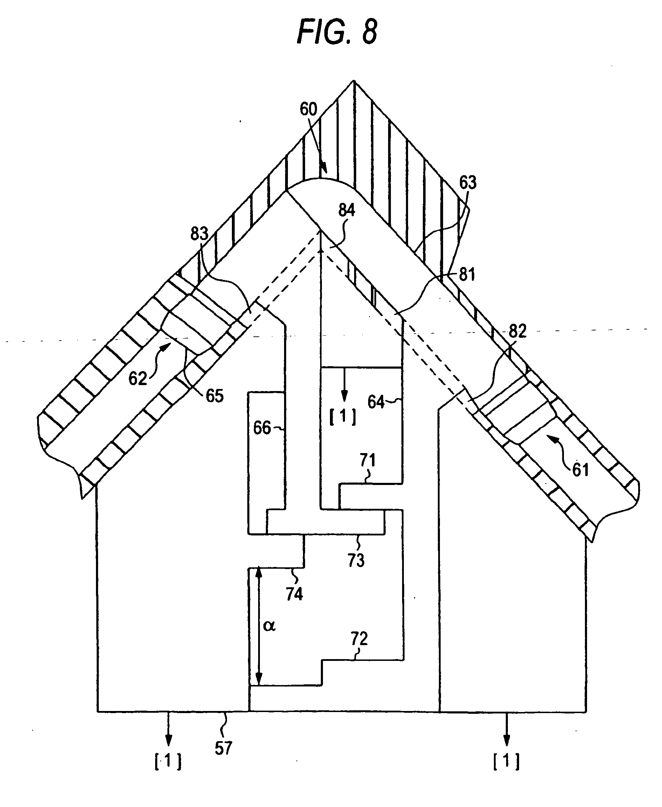

Then, from this state, an EPDM rubber or the like, which is in a plasticized state, is, as shown in Fig. 8, injected into the cavity 90 from a gate, not shown, so as to fill the cavity 90 with the rubber. Thereafter, the EPDM rubber is vulcanized and set, and after the completion of setting, the molds are opened sequentially. Namely, the lower mold 52and the upper mold 53, and the outer upper intermediate mold 54 and the outer lower intermediate mold 55 are first separated from a molded weather strip 1.

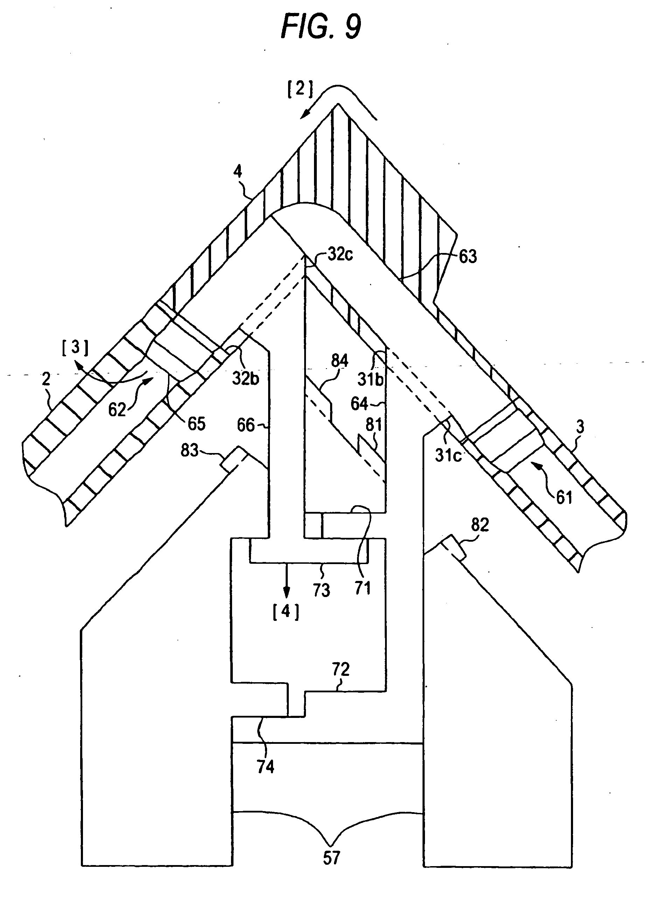

Next, as shown by an arrow denoted by [1] in the same figure, the inner lower intermediate mold 57 is caused to slide to move in a direction (downward as viewed in the figure) in which it is separated from the weather strip 1 together with the inner upper intermediate mold 56. Then, the weather strip and the inner upper intermediate mold 56 and the inner lower intermediate mold 57 are separated apart relatively to each other, and the first and second projections 81 to 84 are allowed to be removed, whereby the first sub-slits 31b, 31c, and second sub-slits 32b, 32c which correspond to the projections, respectively, opened. Namely, gaps are formed by these sub-slits (refer to Fig. 9).

Furthermore, removal work of the molded part 4 so molded from the core mold 60 is performed by an worker. Namely, the molded part 4 is first caused to slide to move by an amount equal to the gap relative to the core mold 60 in a direction shown by an arrow indicated by [2] in Fig. 9. Namely, for example, a portion in the vicinity of a joint between the left-hand side extruded part 2, as viewed in the figure, and the molded part 4 is moved in a direction in which it is separated from the second core main body 65, that is, downwardly leftward along a longitudinal direction of the second core main body 65. Then, a distance between a distal end of the second core main body 65 and the second sub-slit 32b is narrowed specifically, and by pulling the portion in the vicinity of the joint between the extruded part 2 and the molded part 4 as shown by an arrow indicated by [3] in the same figure, the molded part 4 can easily be removed from the distal end of the second core main body 65 (the second core main body 65 is removed from the second slits 32) . Then, at this point in time, the second core 62 is allowed to be put such that it can be separated from the molded part 4 without any interruption.

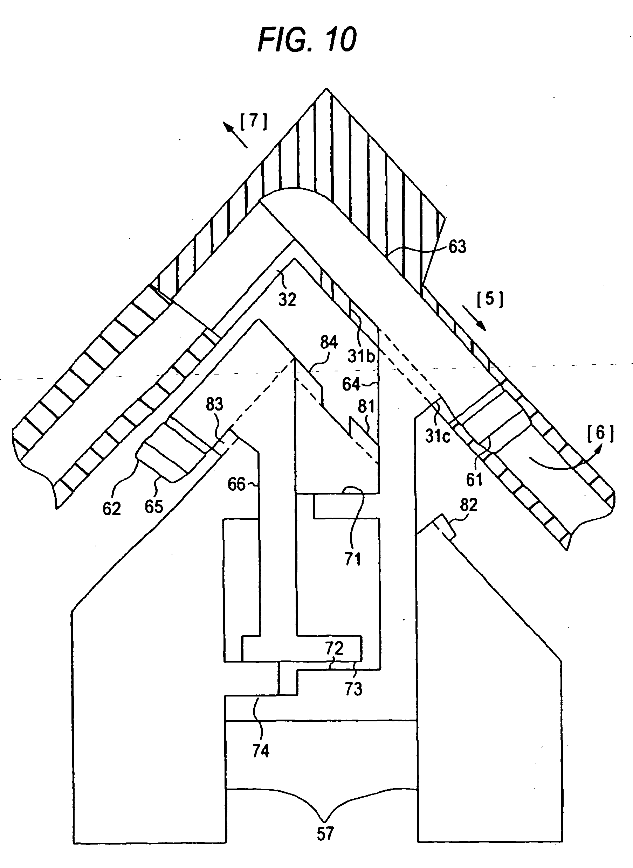

Next, from this state, the second core 62 is moved in a direction in which it is separated from the molded part 4 in a direction as shown by an arrow indicated by [4] in the same figure. Then, as shown in Fig. 10, this leaves only the remaining first core 61 situated within the molded part 4. In this state, the molded part 4 is caused to slide to move by the amount equal to the gap in a direction shown by an arrow indicated by [5] in the same figure relative to the first core 61. Namely, a portion in the vicinity of a joint between the right-hand side extruded part 3, as viewed in the figure, and the molded part 4 is moved in a direction in which it is separated from the first core main body 63, that is, downwardly rightward along a longitudinal direction of the first core main body 63. Then, a distance between a distal end of the first core main body 63 and the first sub-slit 31c is narrowed specifically, and by pulling the portion in the vicinity of the joint between the extruded part 3 and the molded part 4 in a direction shown by an arrow indicated by [6] in the same figure, the molded part 4 can easily be removed from the distal end of the first core main body 63. Then, at this point in time, the first core 61 is allowed to be put such that it can be separated from the molded part 4. Consequently, when the molded part 4 is moved to be separated in a direction shown by an arrow indicated by [7] in the same figure along the first core main body 63, the molded part 4 can easily be moved.

Thus, as has been described in detail heretofore, according to the embodiment, the integral bridge portion 33 is formed between the first slit 31 and the second slit 32 which extend longitudinally for ease of the removal of the molds. By this configuration, being different from the related art in which a slit portion needs to be bonded to be closed after molding, no bonding is required by virtue of the integral bridge portion 33. In addition, in designing, no allowance needs to be made for an extent of deformation that would otherwise be caused in association with closure of the slit portion. Consequently, it is possible to realize the suppression of increases in designing and working manhours and costs. Furthermore, since the slit 30 are formed in the base portion 21 for ease of the removal of the molds, being different from a case where slits are formed in the seal portion, it is possible to prevent the occurrence of a risk that the rigidity of the seal portion is damaged by the slits to thereby reduce the sealing properties.

In addition, in this embodiment, the core mold 60, which is used to mold the molded part 4, is provided with the first core 61 and the second core 62, and the first projections 81, 82 and the second projections 83, 84 are provided on the inner lower intermediate mold 57. Then, when removing the core mold 60, first of all, the inner lower intermediate mold 57 is caused to slide to move along the extending direction of the first extending plate 64 and the second extending plate 66, whereby the first projections 81, 82 are separated apart relative to the first core main body 63 and the second projections 83, 84 are separated apart relative to the second core main body 65. Then, the first projections 81, 82 and the second projections 83, 84 are removed, whereby openings which constitute part of the slit 30 (that is, the first sub-slits 31b, 31c and the second sub-slits 32b, 32c) are formed in the sides of the first extending plate 64 and the sides of the second extending plate 66. By this configuration, the molded part 4 is allowed to be moved relative to the first core main body 63 and the second core main body 65. In this embodiment, for example, the second core main body 65 (the second core 62), which is one of the core main bodies, can first be removed from the second slit 32. Then, the first core main body 63 (the first core 61), which is the remaining core main body, can be removed from the first slit 31, which is the other slit, whereby the core mold 60 can easily be removed. In other words, a remarkable improvement in workability during manufacturing can be realized without calling for a complex construction and placing a load on the individual molds that constitute the molding device 51.

In addition, since the slits are limited to two , only the two extending plates 64, 66 are required to form both the slits 31, 32, and no wide space needs to be provided between both the plates 64, 66. Here, when molding the molded part 4 which corresponds to the corner part, in the event that the inner angle of the corner part is relatively small (for example, less than 100 degrees), there is imposed a limitation that the width of the extending plates 64, 66 has to be narrowed. Even in the event that such is the case, the width of the extending plates 64, 66 can be limited to a minimum width without expanding the space between the two extending plates 64, 66. As a result, there is provided an advantage that the damage to the extending plates 64, 66, as well as the core mold 60 and the like can be suppressed, thereby making it possible to extend the life thereof.

Furthermore, in the embodiment, the second slit 32 is formed so as to extend through the inner corner portion of the molded part 4 (in an L-shape fashion). Consequently, by removing first the second core 62 of the core mold 60, the second slit 32 opens in the intersecting direction (in an L-shape). By this configuration, removing work of the remaining first core 61 can be implemented easily. In this respect, a remarkable improvement in workability during manufacturing can be realized.

In association with this, the second slit 32 is formed so as to extend through the inner corner portion by the second projection 84 of the second projections 83, 84 which is brought into contact with the first core main body 63. Namely, not only the extending length of the sub-slit 32b of the second slit 32 but also the widths of the first extending plate 64 and the second extending plate 66 can easily be set by setting the extent of the length of the second projection 84 which is in contact with the first core main body 63. As a result, the design of molds can be made easier.

In addition to this, since the sliding direction of the inner lower intermediate mold 57, the extending direction of the first extending plate 64 and the extending direction of the second extending plate 66 are made to become parallel with each other, they interfere with each other in no case, whereby work involving slide motion and removal can be performed smoothly, and moreover, the molding device 51 can be restrained from getting complex in construction.

On top of that, sine the bridge portion 33 is situated substantially at the center of the molding range of the molded part, even in the event that the bride portion 33 is provided only at a single location as in the case with the embodiment, stress can preferably be absorbed, and the function of the bridge portion can be exhibited to a maximum extent.

Other aspects of the invention as defined by independent claims 1, 2, and 6 are described below.
(1) A weather strip including a molded part having a base portion and a seal portion which protrudes from the base portion so as to define a hollow portion in the seal portion, wherein
   two slits are formed in the base portion of the molded part so as to extend along a longitudinal direction for removal of a core mold and a bridge portion is formed integrally with the base portion between the slits.
(2) The molded part is formed into substantially an L-shape so as to provide a lateral portion and a vertical portion, and the second slit may be formed so as to extend substantially through the whole area of the lateral portion and partially into the vertical portion, whereas the first slit may be formed in the vertical portion.
   According to (2), the lengths of the respective slits can be restrained from scattering, thereby making it possible to equalize stress. In other words, the position where the bridge portion is placed is made difficult to deviate, thereby making it possible to allow the function of the integrally formed bridge portion to be exhibited sufficiently.
(3) An inner angle of the molded part which corresponds to the corner part is less than 100 degrees.
   As has been described above, when the inner angle of the molded part which corresponds to the corner part is relatively small, in particular, when the inner angle is less than 100 degrees, there is imposed the limitation that the widths of the extending plates have to be narrowed. To cope with this, since the two slits are formed, only the two extending plate are necessary, and the space between both the plates does not have to be expanded, a stable molding can be ensured without placing a load on the molding device.
(4) A manufacturing method of a weather strip having a molded part comprising a base portion and a seal portion which protrudes from the base portion so as to define a hollow portion, comprising the steps of:
   forming a cavity by a molding device provided with at least a core mold for forming the hollow portion and a sliding mold that is slidable relative to the core mold;
   injecting an elastic material which is in a plasticized state into the cavity so as to fill the cavity with the elastic material and then setting the elastic material,
   forming a first slit and a second slit in the base portion so as to extend in a longitudinal direction thereof for removal of the core mold in association with the setting of the elastic material, and forming a bridge portion integrally with the base portion between the first and second slits; and
   opening the molding device so as to remove the core mold from the first slit and the second slit to thereby obtain the molded part in which the hollow portion is molded; wherein
   the core mold includes:
      a first core having a first core main body and a first extending plate which extends from the first core main body; and
      a second core continuously connected to an end of the first core main body which constitutes a longitudinal end of the weather strip and having a second core main body and a second extending plate which extends from the second core main body; and
   the sliding mold comprises:
      a pair of first projections which is to be contacted with the first core main body at opposite sides of the first extending plate; and
      a pair of second projections which is to be contacted with the second main body or the first core main body and the second core main body at opposite sides of the second extending plate; wherein
   the first slit is formed by the first extending plate and the first projection for removal of the first core main body; and
   the second slit is formed by the second projection and the second extending plate for removal of the second core main body;
      whereby when removing the core mold, the sliding mold is caused to slide to move in a direction in which the first extending plate and the second extending plate extend such that the first projection is separated relatively from the first core main body and the second projection is separated relatively from the second core main body or the first core main body and the second core main body, so that the first core main body and the second core main body are removed from the first slit and the second slit, respectively.
   According to (4), the core mold that is used for molding the hollow portion includes the first core and the second core, and the sliding mold includes at least the pair of first projections which is to be contacted with the first core main body at both the sides of the first extending plate and the pair of second projections which is to be contacted with the second main body or the first core main body and the second core main body at both the sides of the second extending plate. Then, when removing the core mold, the first projection is separated relatively from the first core main body and the second projection is separated from the second core main body or the first core main body and the second core main body by sliding the sliding mold along the extending direction of the first extending plate and the second extending plate. Then, the first projection and the second projection are removed, whereby openings, which constitute part of the slits, are formed in both the sides of the first extending plate and both the sides of the second extending plate. By this configuration, a molded body can be moved relatively to the first core main body and the second core main body with a wider degree of freedom, whereby one of the core main bodies can be removed from one of the slits by virtue of the relative movement. Then, when the remaining core main body is removed from the other slit, the core mold can easily be removed. In other words, a further improvement in workability during manufacturing can be realized.
(5) The molded part is formed into substantially an L-shape so as to correspond to a corner part, and the second slit may be formed so as to extend through an inner corner portion.
   According to (5), the second slit is formed so as to extend through the inner corner portion of the molded part. Consequently, when the second core of the core mold is first removed, the second slit opens in the intersecting direction (in an L-shape). By this configuration, removing work of the remaining first core can be implemented easily. In this respect, a remarkable improvement in workability during manufacturing can be realized.
(6) When the elastic material is injected, the second projection may be made to contact with at least the first core main body such that the second projection is in close contact with a side portion of the second extending plate.
   The second slit is formed so as to extend through the inner corner portion by the side of the second projection which is brought into contact with the first core main body. Namely, not only the extending length of the second slit but also the widths of the first extending plate and the second extending plate can easily be set by setting the extent of the length of the second projection which is in contact with the first core main body. As a result, the design of molds can be made easier.
(7) A sliding direction of the sliding mold, an extending direction of the first extending plate and an extending direction of the second extending plate may be made to be in parallel with each other.
   According to (7), since the sliding direction of the sliding mold, the extending direction of the first extending plate and the extending direction of the second extending plate become parallel with each other, they interfere with each other in no case, whereby work such as sliding removal or the like can be performed, and moreover, the molding device can be restrained from getting complex in construction.
(8) The molded part may be formed such that both ends of an extruded part which is formed separately are connected to each other or respective ends of a plurality of extruded parts are connected to each other.
   According to (8), even when the molded part is formed such that an end portion of an extruded part which is formed separately is connected thereto, the core mold can easily be removed.
(9) A molding device of a weather strip, comprising:
   a core mold and a sliding mold which is provided slidably relative to the core mold for forming a molded part of a weather strip which comprises a base portion and a seal portion which protrudes from the base portion so as to form a hollow portion, wherein
   the core mold includes:
      a first core having a first core main body and a first extending plate which extends from the first core main body for forming the hollow portion; and
      a second core continuously connected to an end of the first core main body which constitutes a longitudinal end of a weather strip and having a second core main body and a second extending plate which extends from the second core main body for forming the hollow portion; and
   the sliding mold includes:
      a pair of first projections which is to be contacted with the first core main body such that the first projections are brought in a close contact with opposite sides of the first extending plate; and
      a pair of second projections which are to be contacted with the second main body or the first core main body and the second core main body at least such that the second projections are brought in close contact with opposite sides of the second extending plate.
   According to (9), basically, the same function and advantage as those provided by (4) are provided.
The molded part is formed into substantially an L-shape so as to correspond to a corner part, and the second projection may be provided so as to extend through an inner corner portion of a portion which corresponds to the corner part so as to be brought into contact with at least the first core main body such that the second projection is in close contact with a side portion of the second extending plate.
   The second projection is provided so as to extend through the inner corner portion which is a portion corresponding to the corner part so as to be brought into contact with the first core main body and the second core main body such that the second projection is in close contact with a side portion of the second extending portion. By this configuration, one (the second slit) of the two slits to be formed is formed so as to extend through the inner corner portion. Consequently, by removing first the second core of the core mold, the slit corresponding thereto opens in the intersecting direction (in an L-shape). By this configuration, removing work of the remaining first core can easily be performed. In this respect, a remarkable improvement in workability during manufacturing can be realized.

Note that the invention is not limited to what has been described heretofore with respect to the embodiment but may be embodied, for example, in ways that will be described below. Applications and alterations that will not be described below are, of course, acceptable.
(a) While, in the embodiment, the first slit 31 and the second slit 32 are provided substantially in a straight line, they are not necessarily provided on the same line but may be formed such that they deviate from each other in a widthwise direction.
(b) While, in the embodiment, nothing particular is mentioned, the slits which intersect in the longitudinal direction of the slit 30 (for example, the slits which intersect in a perpendicular direction) may be formed so as to extend further. By adopting this configuration, the removal work of the core mold 60 can be performed more smoothly.
(c) While, in the embodiment, the inner corner portion is specifically described as being at less than 100 degrees, there will be no problem even in the case where the inner corner portion is formed at an angle which exceeds 100 degrees, which does not form part of the invention. For example, a weather strip can have a molded part which has an inner angle of 100 degrees or greater but has a very small area.
(d) While, in the embodiment, the case is specified in which the second core 62 is first removed and thereafter, the first core 61 is removed, the first core 61 may be removed first.
(e) As has been described above, the weather strip has flexibility. By this configuration, the lengths of the respective sub-slits 31b, 31c, 32b, 32c may be altered appropriately, provided that the first core main body 63 and the second core main body 65 can be removed from the weather strip 1 (the molded part 4). Furthermore, while, in the embodiment, the respective sub-slits 31b, 31c, 32b, 32c are provided at both the sides of the extending plates 64, 66, that is, the pairs of projections 81 to 84 are provided which correspond to those sub-slits, respectively, the sub-slits or the projections are not necessarily provided at the four locations, and for example, they may be provided only at two locations (that is, only projections 81, 84) on the center side (the corner portion side) . In addition, only three projections including the aforesaid two projections (that is, the projections 81, 84 and the projection 83 corresponding to the second core 62 which is removed first) may be provided.
(f) While, in the embodiment, the projections 81 to 84 are described as being provided on the inner lower intermediate mold 57, they may be provided on the inner upper intermediate mold 56.
(g) While, in the embodiment, the inner upper intermediate mold 56 and the inner lower intermediate mold 57 are described as being caused to slide to move, the core mold 60 may be made to slide to move together with the weather strip 1.
(j) While, in the embodiment, nothing particular is mentioned, a clip attaching hole may be provided in the molded part 4, or an insert may be provided (embedded) in the molded part 4.

## Claims

1. A weather strip (1) comprising:
a molded part (4, 5) formed into substantially an L-shape so as to provide a lateral portion and a vertical portion and corresponding to a corner part of the weather strip (1), having a base portion (21) and a seal portion (23) which protrudes from said base portion so as to define a hollow portion (22),
wherein only two slits (31, 32), a first slit (31) and a second slit (32), are formed in said base portion (21) of said molded part (4, 5) so as to extend along a longitudinal direction for removal of a core mold and
a bridge portion (33) is formed integrally with said base portion (21) between said first and second slits (31, 32),
said second slit (32) is formed so as to extend substantially through whole area of said lateral portion and partially into the vertical portion, and said first slit (31) is formed in said vertical portion; and said second slit (32) is formed so as to extend through an inner corner portion of said corner part, wherein an inner angle of said molded part which corresponds to said corner part is less than 100 degrees.

2. A manufacturing method of a weather strip (1) according to claim 1 having a molded part (4, 5), wherein said molded part (4, 5) is formed into substantially an L-shape so as to correspond to a corner part comprising a base portion (21) and a seal portion (23) which protrudes from said base portion (21) so as to define a hollow portion (22), comprising the steps of:
forming a cavity by a molding device (51) provided with at least a core mold (60) for forming said hollow portion and a sliding mold (57) that is slidable relative to said core mold;
injecting an elastic material which is in a plasticized state into said cavity, so as to fill said cavity with said elastic material, and then setting said elastic material,
forming a first slit (31) and a second slit (32) in said base portion so as to extend in a longitudinal direction thereof for removal of said core mold (60) in association with the setting of said elastic material, and
forming a bridge portion (33) integrally with said base portion between said first and second slits (31, 32); and
opening said molding device (51) so as to remove said core mold (60) from said first slit (31) and said second slit (32) to thereby obtain said molded part (4, 5) in which said hollow portion (22) is molded; wherein
said core mold (60) includes:
a first core (61) having a first core main body (63) and a first extending plate (64) which extends from said first core main body (63); and
a second core (62) continuously connected to an end of said first core main body (63) which constitutes a longitudinal end of a weather strip and having a second core main body (65) and a second extending plate (66) which extends from said second core main body (65); and
said sliding mold (57) includes:
a first projection (81, 82) which is to be contacted with said first core main body (63) at a second core side of said first extending plate (64); and
a second projection (83, 84) which is to be contacted with said second core main body (65) or said first core main body (63) at a fist core side of said second extending plate (66);
wherein said first slit (31) is formed by said first extending plate (64) and said first projection (81, 82) for removal of said first core main body (63); and
said second slit (32) is formed by said second projection (83, 84) and said second extending plate (66) for removal of said second core main body (65); said second slit (32) is formed so as to extend through an inner corner portion of said molded part,
whereby when removing said core mold (60), said sliding mold (57) is caused to slide to move in a direction in which said first extending plate (64) and said second extending plate (66) extend such that said first projection (81, 82) and said second projection (83, 84) are separated relatively from said first core main body (63) and said second core main body (65), respectively, so that said first core main body (63) and said second core main body (65) are removed from said first slit (31) and said second slit (32), respectively.

3. A manufacturing method of a weather strip (1) according to Claim 2, wherein when said elastic material is injected, said second projection (83, 84) is made to contact with at least said first core main body (63) such that said second projection (83, 84) is brought in a close contact with a side portion of said second extending plate (66).

4. A manufacturing method of a weather strip (1) according to any one of Claims 2 to 3, wherein a sliding direction of said sliding mold (57), an extending direction of said first extending plate (64) and an extending direction of said second extending plate (66) are made to be in parallel with each other.

5. A manufacturing method of a weather strip (1) according to any one of Claims 2 to 4, wherein said molded part (4, 5) is formed such that opposite ends of an extruded part (1, 2) which is formed separately are connected to each other or respective ends of a plurality of extruded parts (1, 2) are connected to each other.

6. A molding device (51) of a weather strip (1) according to Claim 1, comprising:
a core mold (60) and a sliding mold (5 7) which is provided slidably relative to said core mold (60) for forming a molded part (4, 5) of said weather strip (1) which comprises a base portion (21) and a seal portion (23) which protrudes from said base portion (21) so as to form a hollow portion (22), wherein
said core mold (60) includes:
a first core (61) having a first core main body (63) and a first extending plate (64) which extends from said first core main body (63) for forming said hollow portion (22); and
a second core (62) continuously connected to an end of said first core main body (63) which constitutes a longitudinal end of a weather strip (1) and having a second core main body (65) and a second extending plate (66) which extends from said second core main body (65) for forming said hollow portion (22); and
said sliding mold (57) includes:
a first projection (81, 82) which is to be contacted with said first core main body (63) such that said first projection (81, 82) is brought in a close contact with a second core side of said first extending plate (64), wherein said molded part (4, 5) is formed into substantially an L-shape so as to correspond to a corner part of said weather strip (1); and
a second projection (83, 84) which is provided so as to extend through an inner corner portion of said molded part which corresponds to said corner part so as to be brought into contact with at least said first core main body (63) such that said second projection (83, 84) is brought in a close contact with a side portion of said second expending plate (66).

## Patentansprüche

1. Dichtungsstreifen (1), mit:
einem gegossenen Teil (4, 5), das in einer im Wesentlichen L-Form so ausgebildet ist, dass es einen seitlichen Bereich und einen vertikalen Bereich vorsieht, und einem Eckteil des Dichtungsstreifens (1) entspricht, mit einem Basisbereich (21) und einem Dichtbereich (23), der von dem Basisbereich so vorsteht, dass er einen hohlen Bereich (22) definiert,
wobei lediglich zwei Schlitze (31, 32), ein erster Schlitz (31) und ein zweiter Schlitz (32), in dem Basisbereich (21) des gegossenen Teils (4, 5) so ausgebildet sind, dass sie sich entlang einer Längsrichtung erstrecken zum Entfernen einer Kernform, und
ein Brückenbereich (33) integral mit dem Basisbereich (21) zwischen dem ersten und dem zweiten Schlitz (31, 32) ausgebildet ist,
der zweite Schlitz (32) so ausgebildet ist, dass er sich im Wesentlichen durch das gesamte Gebiet des seitlichen Bereichs und teilweise in den vertikalen Bereich erstreckt, und der erste Schlitz (31) in dem vertikalen Bereich ausgebildet ist und der zweite Schlitz (32) so ausgebildet ist, dass er sich durch einen inneren Eckbereich des Eckteils erstreckt, wobei ein Innenwinkel des gegossenen Teils, das dem Eckteil entspricht, weniger als 100 Grad beträgt.

2. Herstellungsverfahren für einen Dichtungsstreifen (1) nach Anspruch 1, der ein gegossenes Teil (4, 5) aufweist, wobei das gegossene Teil (4, 5) in einer im Wesentlichen L-Form so ausgebildet ist, dass es einem Eckteil entspricht, das einen Basisbereich (21) und einen Dichtbereich (23), der von dem Basisbereich (21) so vorsteht, dass er einen hohlen Bereich (22) definiert, aufweist, aufweisend die Schritte:
Ausbilden eines Hohlraums durch eine Gusseinrichtung (51), die mit wenigstens einer Kernform (60) zum Ausbilden des hohlen Bereichs und einer Gleitform (56), die relativ zu der Kernform verschiebbar ist, versehen ist,
Einspritzen eines elastischen Materials, das in einem plastizierten Zustand ist, so in den Hohlraum, dass der Hohlraum mit dem elastischen Material gefüllt wird, und dann Verfestigen des elastischen Materials,
Ausbilden eines ersten Schlitzes (31) und eines zweiten Schlitzes (32) so in dem Basisbereich, dass sie sich in einer Längsrichtung desselben erstrecken zum Entfernen der Kernform (60) in Verbindung mit dem Verfestigen des elastischen Materials, und
Ausbilden eines Brückenbereichs (33) integral mit dem Basisbereich zwischen dem ersten und dem zweiten Schlitz (31, 32), und
Öffnen der Gusseinrichtung (51) so, dass die Kernform (60) von dem ersten Schlitz (31) und dem zweiten Schlitz (32) entfernt wird, zum **dadurch** Erhalten des gegossenen Teils (4, 5), in dem der hohle Bereich (22) gegossen ist, wobei
die Kernform (60) aufweist:
einen ersten Kern (61) mit einem ersten Kernhauptkörper (63) und einer ersten Erweiterungsplatte (64), die sich von dem ersten Kernhauptkörper (63) erstreckt, und
einen zweiten Kern (62), der durchgängig mit einem Ende des ersten Kernhauptkörpers (63) verbunden ist, der ein Längsende eines Dichtungsstreifens bildet und einen zweiten Kernhauptkörper (65) und eine zweite Erweiterungsplatte (66), die sich von dem zweiten Kernhauptkörper (65) erstreckt, aufweist, und
die Gleitform (57) aufweist:
einen ersten Vorsprung (81, 82), der mit dem ersten Kernhauptkörper (63) an einer Seite des zweiten Kerns der ersten Erweiterungsplatte (64) in Berührung zu bringen ist, und
einen zweiten Vorsprung (83, 84), der mit dem zweite Kernhauptkörper (65) oder dem ersten Kernhauptkörper (63) an einer Seite des ersten Kerns der zweiten Erweiterungsplatte (66) in Berührung zu bringen ist,
wobei der erste Schlitz (31) durch die erste Erweiterungsplatte (64) und den ersten Vorsprung (81, 82) zum Entfernen des ersten Kernhauptkörpers (63) ausgebildet wird, und
der zweite Schlitz (32) durch den zweiten Vorsprung (83, 84) und die zweite Erweiterungsplatte (66) zum Entfernen des zweiten Kernhauptkörpers (65) ausgebildet wird, wobei der zweite Schlitz (32) so ausgebildet wird, dass er sich durch einen inneren Eckbereich des gegossenen Teils erstreckt,
wodurch, wenn die Kernform (60) entfernt wird, bewirkt wird, dass sich die Gleitform (57) verschiebt zum Bewegen in einer Richtung, in der sich die erste Erweiterungsplatte (64) und die zweite Erweiterungsplatte (66) erstrecken, derart, dass der erste Vorsprung (81, 82) und der zweite Vorsprung (83, 84) relativ von dem ersten Kernhauptkörper (63) beziehungsweise dem zweiten Kernhauptkörper (65) getrennt werden, so dass der erste Kernhauptkörper (63) und der zweite Kernhauptkörper (65) von dem ersten Schlitz (31) beziehungsweise dem zweiten Schlitz (32) entfernt werden.

3. Herstellungsverfahren für einen Dichtungsstreifen (1) nach Anspruch 2, wobei, wenn das elastische Material eingespritzt wird, bewirkt wird, dass der zweite Vorsprung (83, 84) wenigstens den ersten Kernhauptkörper (63) derart berührt, dass der zweite Vorsprung (83, 84) in eine enge Berührung mit einem Seitenbereich der zweiten Erweiterungsplatte (66) gebracht wird.

4. Herstellungsverfahren für einen Dichtungsstreifen (1) nach einem der Ansprüche 2 bis 3, wobei bewirkt wird, dass eine Gleitrichtung der Gleitform (57), eine Erstreckungsrichtung der ersten Erweiterungsplatte (64) und eine Erstreckungsrichtung der zweiten Erweiterungsplatte (66) parallel zueinander sind.

5. Herstellungsverfahren für einen Dichtungsstreifen (1) nach einem der Ansprüche 2 bis 4, wobei das gegossene Teil (4, 5) derart ausgebildet wird, dass sich gegenüberliegende Enden eines extrudierten Teils (1, 2), das separat ausgebildet wird, miteinander verbunden werden oder entsprechend Enden einer Mehrzahl von extrudierten Teilen (1,2) miteinander verbunden werden.

6. Gusseinrichtung (51) für einen Dichtungsstreifen (1) nach Anspruch 1, mit:
einer Kernform (60) und einer Gleitform (57), die relativ zu der Kernform (60) verschiebbar vorgesehen ist, zum Ausbilden eines gegossenen Teils (4, 5) des Dichtungsstreifens (1), das einen Basisbereich (21) und einen Dichtbereich (23), der von dem Basisbereich (21) so vorsteht, dass er einen hohlen Bereich (22) bildet, aufweist, wobei
die Kernform (60) aufweist:
einen ersten Kern (61) mit einem ersten Kernhauptkörper (63) und einer ersten Erweiterungsplatte (64), die sich von dem ersten Kernhauptkörper (63) zum Ausbilden des hohlen Bereichs (22) erstreckt, und
einen zweiten Kern (62), der durchgängig mit einem Ende des ersten Kernhauptkörpers (63) verbunden ist, der ein Längsende eines Dichtungsstreifens (1) bildet und einen zweiten Kernhauptkörper (65) und eine zweite Erweiterungsplatte (66) aufweist, die sich von dem zweiten Kernhauptkörper (65) zum Ausbilden des hohlen Bereichs (22) erstreckt, und
die Gleitform (57) aufweist:
einen ersten Vorsprung (81, 82), der mit dem ersten Kernhauptkörper (63) derart in Berührung zu bringen ist, dass der erste Vorsprung (81, 82) in eine enge Berührung mit einer Seite des zweiten Kerns der ersten Erweiterungsplatte (64) gebracht wird, wobei das gegossene Teil (4, 5) in einer im Wesentlichen L-Form so ausgebildet wird, dass es einem Eckteil des Dichtungsstreifens (1) entspricht, und
einen zweiten Vorsprung (83, 84), der so vorgesehen ist, dass er sich durch einen inneren Eckbereich des gegossenen Teils erstreckt, das dem Eckteil entspricht, so dass er mit wenigstens dem ersten Kernhauptkörper (63) derart in Berührung gebracht wird, dass der zweite Vorsprung (83, 84) in eine enge Berührung mit einem Seitenbereich der zweiten Erweiterungsplatte (66) gebracht wird.

## Revendications

1. Bande d'étanchéité (1) comportant :
une partie moulée (4, 5) formée avec une forme sensiblement en L de façon à procurer une partie latérale et une partie verticale et correspondant à une partie de coin de la bande d'étanchéité (1), ayant une partie de base (21) et une partie de joint (23) qui dépasse de ladite partie de base afin de définir une partie creuse (22),
seulement deux fentes (31, 32), une première fente (31) et une deuxième fente (32), étant formées dans ladite partie de base (21) de ladite partie moulée (4, 5) de façon à s'étendre le long d'une direction longitudinale pour le retrait d'un moule à noyau et
une partie de pont (33) est formée d'un seul tenant avec ladite partie de base (21) entre lesdites première et deuxième fentes (31, 32),
ladite deuxième fente (32) est formée de façon à s'étendre sensiblement sur toute la surface de ladite partie latérale et partiellement dans la partie verticale, et ladite première fente (31) est formée dans ladite partie verticale ; et ladite deuxième fente (32) est formée de façon à s'étendre à travers une partie de coin intérieur de ladite partie de coin, un angle intérieur de ladite partie moulée qui correspond à ladite partie de coin étant inférieur à 100 degrés.

2. Procédé de fabrication d'une bande d'étanchéité (1) selon la revendication 1 ayant une partie moulée (4, 5), ladite partie moulée (4, 5) étant formée avec une forme sensiblement en L de façon à correspondre à une partie de coin, comportant une partie de base (21) et une partie de joint (23) qui dépasse de ladite partie de base (21) afin de définir une partie creuse (22), comportant les étapes de
formation d'une cavité par un dispositif de moulage (51) pourvu d'au moins un moule à noyau (60) afin de former ladite partie creuse et un moule coulissant (57) qui peut coulisser par rapport audit moule à noyau ;
injection d'une matière élastique qui est dans un état plastifié dans ladite cavité, de façon à remplir ladite cavité avec ladite matière élastique, et prise ensuite de ladite matière élastique,
formation d'une première fente (31) et d'une deuxième fente (32) dans ladite partie de base de façon à s'étendre dans une direction longitudinale pour le retrait dudit moule à noyau (60) en association avec la prise de ladite matière élastique, et
formation d'une partie de pont (33) d'un seul tenant avec ladite partie de base entre lesdites première et deuxième fentes (31, 32) ; et
ouverture dudit dispositif de moulage (51) afin d'enlever ledit moule à noyau (60) de ladite première fente (31) et ladite deuxième fente (32) afin d'obtenir ainsi ladite partie moulée (4, 5) dans laquelle ladite partie creuse (22) est moulée ;
ledit moule à noyau (60) comprenant :
un premier noyau (61) ayant un premier corps principal de noyau (63) et une première plaque d'extension (64) qui s'étend depuis ledit premier corps principal de noyau (63) ; et
un deuxième noyau (62) relié de manière continue à une extrémité dudit premier corps principal de noyau (63) qui constitue une extrémité longitudinale d'une bande d'étanchéité et ayant un deuxième corps principal de noyau (65) et une deuxième plaque d'extension (66) qui s'étend depuis ledit deuxième corps principal de noyau (65) ; et
ledit moule coulissant (57) comprenant :
une première saillie (81, 82) qui doit être amenée en contact avec ledit premier corps principal de noyau (63) sur un deuxième côté de noyau de ladite première plaque d'extension (64) ; et
une deuxième saillie (83, 84) qui doit être amenée en contact avec ledit deuxième corps principal de noyau (65) ou ledit premier corps principal de noyau (63) sur un premier côté de noyau de ladite deuxième plaque d'extension (66) ;
ladite première fente (31) étant formée par ladite première plaque d'extension (64) et ladite première saillie (81, 82) pour le retrait dudit premier corps principal de noyau (63) ; et
ladite deuxième fente (32) étant formée par ladite deuxième saillie (83, 84) et ladite deuxième plaque d'extension (66) pour le retrait dudit deuxième corps principal de noyau (65) ; ladite deuxième fente (32) étant formée de façon à s'étendre à travers une partie de coin intérieur de ladite partie moulée ;
de sorte que, lors du retrait dudit moule à noyau (60), ledit moule coulissant (57) est amené à coulisser afin de se déplacer dans une direction dans laquelle ladite première plaque d'extension (64) et ladite deuxième plaque d'extension (66) s'étendent de telle sorte que ladite première saillie (81, 82) et ladite deuxième saillie (83, 84) sont séparées par rapport audit premier corps principal de noyau (63) et audit deuxième corps principal de noyau (65), respectivement, de telle sorte que ledit premier corps principal de noyau (63) et ledit deuxième corps principal de noyau (65) sont enlevés de ladite première fente (31) et ladite deuxième fente (32), respectivement.

3. Procédé de fabrication d'une bande d'étanchéité (1) selon la revendication 2, selon lequel, quand ladite matière élastique est injectée, ladite deuxième saillie (83, 84) est amenée en contact avec au moins ledit premier corps principal de noyau (63) de telle sorte que ladite deuxième saillie (83, 84) est amenée en contact rapproché avec une partie latérale de ladite deuxième plaque d'extension (66).

4. Procédé de fabrication d'une bande d'étanchéité (1) selon l'une quelconque des revendications 2 à 3, selon lequel une direction de coulissement dudit moule coulissant (57), une direction d'extension de ladite première plaque d'extension (64) et une direction d'extension de ladite deuxième plaque d'extension (66) sont amenées à être parallèles l'une à l'autre.

5. Procédé de fabrication d'une bande d'étanchéité (1) selon l'une quelconque des revendications 2 à 4, selon lequel ladite partie moulée (4, 5) est formée de telle sorte que des extrémités opposées d'une partie extrudée (1, 2) qui est formée séparément sont reliées l'une à l'autre ou des extrémités respectives d'une multiplicité de pièces extrudées (1, 2) sont reliées l'une à l'autre.

6. Dispositif de moulage (51) d'une bande d'étanchéité (1) selon la revendication 1, comportant :
un moule à noyau (60) et un moule coulissant (57) qui est prévu de façon coulissante par rapport audit moule à noyau (60) afin de former une partie moulée (4, 5) de ladite bande d'étanchéité (1) qui comporte une partie de base (21) et une partie de joint (23) qui dépasse de ladite partie de base (21) afin de former une partie creuse (22),
ledit moule à noyau (60) comprenant :
un premier noyau (61) ayant un premier corps principal de noyau (63) et un première plaque d'extension (64) qui s'étend depuis ledit premier corps principal de noyau (63) afin de former ladite partie creuse (22) ; et
un deuxième noyau (62) relié de manière continue à une extrémité dudit premier corps principal de noyau (63) qui constitue une extrémité longitudinale d'une bande d'étanchéité (1) et ayant un deuxième corps principal de noyau (65) et une deuxième plaque d'extension (66) qui s'étend depuis ledit deuxième corps principal de noyau (65) afin de former ladite partie creuse (22) ; et
ledit moule coulissant (57) comprenant :
une première saillie (81, 82) qui doit être amenée en contact avec ledit premier corps principal de noyau (63) de telle sorte que ladite première saillie (81, 82) est amenée en contact rapproché avec un deuxième côté de noyau de ladite première plaque d'extension (64), ladite partie moulée (4, 5) étant formée avec une forme sensiblement en L de façon à correspondre à une partie de coin de ladite bande d'étanchéité (1) ; et
une deuxième saillie (83, 84) qui est prévue de façon à s'étendre à travers une partie de coin intérieur de ladite partie moulée qui correspond à ladite partie de coin de façon à être amenée en contact avec au moins ledit premier corps principal de noyau (63) de telle sorte que ladite deuxième saillie (83, 84) est amenée en contact rapproché avec une partie latérale de ladite deuxième plaque d'extension (66).
